# EUROPEAN PATENT APPLICATION

(11) **EP 4 628 310 A1**
(43) Date of publication of application: **08.10.2025**
(21) Application number: 25168042.7
(22) Date of filing: 02.04.2025
(51) Int. Cl.: B41J 3/407, B65G 54/02

(54) **PRINTING DEVICE USING MAGNETIC MOVEMENT**

(30) Priority: 02.04.2024 US 202463572978 P
(71) Applicant: Norwalt Design, Inc., Randolph, NJ 07869 (US)
(72) Inventor: SEITEL, Michael, RANDOLPH, NJ 07869 (US)
(74) Representative: EP&C

(57) **Abstract**

A system for direct printing on a three dimensional article includes a plurality of print stations, each print station comprising a print head for delivering ink; a mover having a holder for securing a three dimensional article and at least one magnet; and a plurality of tiles each comprising energizable coils for producing an electrical field for effecting the at least one magnet in the mover to controllably float the mover about the plurality of tiles; where the plurality of print stations are proximal to at least some of the tiles in the plurality of tiles; and where the mover is configured to have six degrees of motion relative to the plurality of tiles to position a portion of the surface of the three dimensional article proximally normal to the print head. The system may further include curing stations, vision or inspection stations, and/or pre-treatment stations.

## Description

### CROSS-REFERENCE TO RELATED APPLICATIONS

This application claims the benefit of U.S. Provisional Application No. 63/572,978, filed April 2, 2024, the contents of which is incorporated by reference herein.

### FIELD OF THE INVENTION

The present invention is related to printing devices, more particularly, to a printing devices configured to print directly onto a surface of an article, such as a container, by magnetic movement of the article.

### BACKGROUND OF THE INVENTION

Currently printing devices for direct container printing include devices for mechanically moving an article, such as a container, proximal to a printing device, such as a print head of the printing device. As container surfaces are often three-dimensionally shaped or contoured surfaces, controlled and varied movement of the container is required. For example, U.S. Patent Application Publication No. 2022/0219465 to Norwalt Design, Inc. describes linear and rotary mechanical actuators for controllably moving mandrels having a container secured thereto for printing purposes.

U.S. Patent No. 11,430,683 B2 describes the use and control of a transport body having magnetically levitating movers. In an exemplary embodiment, the transport body is a moving vehicle. U.S. Patent Application No. 2023/0382661 A1 describes the use of complicated transport devices for moving both containers and tools for performing work on the containers. The tools are generically described as orientation sensing, labeling, coding, printing, inspecting, heating, cooling, drying, illuminating, vibrating, weighing, scanning or measuring. These patent documents, however, fails to describe systems or methods for direct printing onto curved surfaces of three-dimensionally shaped articles.

There is a need for systems and methods for direct printing onto curved surfaces of three dimensionally shaped articles.

### SUMMARY OF THE INVENTION

The present invention provides for systems and methods for directed printing onto a three-dimensional article, including a curved surface thereon. The systems and methods position the curved surface normally proximal to a print head or print heads for receiving ink. The systems and methods use levitating magnetic movement of a mover having the article for the desired placement of the article near the print heads.

According to an embodiment of the present disclosure, a system for direct printing on a three dimensional article may include a plurality of print stations, each print station comprising a print head for delivering ink; a mover having a holder for securing a three dimensional article and at least one magnet; and a plurality of tiles each comprising energizable coils for producing an electrical field for effecting the at least one magnet in the mover to controllably float the mover about the plurality of tiles. The plurality of print stations may be proximal to at least some of the tiles in the plurality of tiles. The mover may be configured to have six degrees of motion relative to the plurality of tiles to position a portion of the surface of the three dimensional article proximally normal to the print head.

The plurality of tiles may be arranged in an array of tiles. The array of tiles may be a closed loop arrangement of tiles or may be a line of tiles.

The system may further include a plurality of curing stations for curing ink printed on the three dimensional article, at least one vision station for inspecting the article, and/or at least one treatment station for pretreating the article prior to printing.

The system may provide six degrees of motion for the mover and for the article secured thereto. six degrees of motion may include front-to-back linear movement of the mover relative to a surface of the plurality of tiles, side-to-side linear movement of the mover relative to said surface of the plurality of tiles, vertical movement of the mover relative to said surface of the plurality of tiles, rotation around a front-to-back axis of the mover relative a surface of the plurality of tiles, rotation around a side-to-side axis of the mover relative a surface of the plurality of tiles, and rotation around the vertical axis of the mover relative a surface of the plurality of tiles.

The mover may also be configured to have a controllable velocity and/or acceleration relative to the plurality of tiles. Both the velocity and acceleration, including deceleration, may vary as desired.

The plurality of tiles may be horizontally or vertically disposed within the system.

A method for direct printing on a three dimensional article may include providing a plurality of print stations, each print station comprising a print head for delivering ink; providing a mover comprising a holder for securing a three dimensional article and at least one magnet; providing a plurality of tiles each comprising energizable coils for producing an electrical field for effecting the at least one magnet in the mover, wherein the plurality of print stations are proximal to at least some of the tiles in the plurality of tiles; magnetically levitating the mover away from the plurality of tile; controllably moving the levitating the mover about the plurality of tiles; positioning the mover with controlled movement until a portion of the surface of the three dimensional article proximally normal to the print head; and printing ink from the print head to the portion of the surface of the three dimensional article. The controlled movement of the mover may include six degrees of motion relative to the plurality of tiles.

The method may include arranging the plurality of tiles into an array of tiles, such as a closed loop arrangement of tiles or as a line of tiles.

The method may further include providing a plurality of curing stations and curing the ink printed on the portion of the surface of the three dimensional article.

The method may further include providing at least one vision station and inspecting the article.

The method may further include providing at least one treatment station and pretreating the article prior to printing.

The method may further include controlling the mover for front-to-back linear movement of the mover relative to a surface of the plurality of tiles, side-to--side linear movement of the mover relative to said surface of the plurality of tiles, vertical movement of the mover relative to said surface of the plurality of tiles, rotation around a front-to-back axis of the mover relative a surface of the plurality of tiles, rotation around a side-to-side axis of the mover relative a surface of the plurality of tiles, and rotation around the vertical axis of the mover relative a surface of the plurality of tiles.

The method may further include controlling a velocity and/or an acceleration of the mover relative to the plurality of tiles.

The method may further include horizontally or vertically disposing the plurality of tiles within the system.

These and other features and advantages of the present invention will become apparent from the following detailed description of illustrative embodiments thereof, which is to be read in connection with the accompanying drawings. Corresponding reference element numbers or characters indicate corresponding parts throughout the several views of the drawings.

### BRIEF DESCRIPTION OF THE DRAWINGS

Figure 1 is an illustration of a portion of a printing system according to the present disclosure.
Figure 2 is a partial side elevational view of a levitating mover and a tile useful with the printing system of Figure 1.
Figure 3 is an illustration of an example configuration of workstations and an array of tiles having movers thereover according to the present disclosure.
Figure 4 is a schematic, side elevational view of a workstation, a tile, and a mover with a product according to the present disclosure.
Figure 5 is a schematic, top view of a workstation, a tile, and a mover with a product illustrating different product and tooling configurations according to the present disclosure.
Figure 6 is a schematic, side elevational view of Figure 3 showing side view of X-Z motions according to the present disclosure.
Figure 7 is schematic, top view of a workstation and a mover showing X-Y motions according to the present disclosure.
Figures 8 and 9 are schematic, side elevational views of Figure 3 showing side view of X-Z motions according to the present disclosure.
Figures 10 and 11 are schematic, side elevational views of Figure 3 showing side views of X motions according to the present disclosure.
Figures 12 and 13 are schematic, side elevational views of Figure 3 showing side views of additional X-Z motions according to the present disclosure.
Figures 14, 15, and 16 are schematic, top views of Figure 3 showing top views of X-Y rotations according to the present disclosure.
Figures 17 and 18 are schematic, top views of Figure 3 showing top views of additional X motions according to the present disclosure.
Figures 19 and 20 are schematic, top views of Figure 3 showing top views of additional Y motions according to the present disclosure.
Figures 21 and 22 are schematic, top views of Figure 3 showing top views of additional X-Y motions according to the present disclosure.
Figures 23-26 schematically depict various orientations of a workstation, a tile, and a mover with a product relative to grade or ground according to the present disclosure.
Figures 27-31 are schematic illustrations of various orientations of arrays of tiles having workstations disposed therearound according to the present disclosure.
Figure 32 is a schematic illustration of the tile array of Figure 30 having a guide member disposed about the tile array according to the present disclosure.
Figure 33 is a schematic illustration of the tile array of Figure 30 showing difference loading and unloading mover configurations according to the present disclosure.
Figure 34 a schematic, side elevational view of multiple workstations disposed about a tile and a mover with a product showing X-Z movements and rotations according to the present disclosure.
Figure 35 a schematic, top view of multiple workstations disposed about a tile and a mover with a product showing X-Y movements and rotations according to the present disclosure.
Figure 36 schematically depicts energizing coils within a tile according to the present disclosure.
Figure 37 schematically depicts magnets within a mover according to the present disclosure.

### DETAILED DESCRIPTION

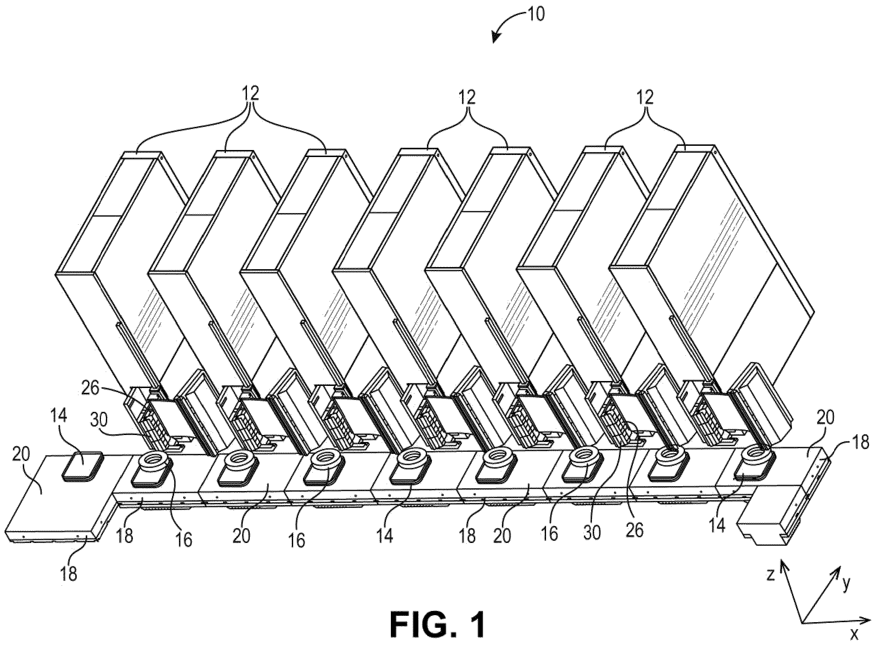

Figure 1 is an illustration of a portion of a printing system 10 according to the present disclosure. The printing system 10 includes workstations 12 associated with different functions associated with direct article or container printing. A mover 14 includes a tooling or holder 16 for releasably securing an article or container (not shown). The mover 14 is moveable about the tile surface 20 of the tile 18 as a magnetic levitating shuttle. As described herein below, such movement may often include movement in six dimensions, such as front-to-back linear movement, side-to-side linear movement, vertical movement, rotation around the front-to-back axis ("roll"), rotation around the side-to-side axis ("pitch"), and rotation around the vertical axis ("yaw"). The mover 14 may tilt (e.g., roll, pitch, and/or yaw) at up to 5 degrees or more with respect to the tile 18. Such controlled and varied movements are useful for, among things, to position an article or container (not shown) proximal, including juxtaposing proximal, to print heads 30 of the print station 26.

In Figure 1 an X-axis may be considered to be along the planar length of the tile 18, such as a longitudinal axis along an array of tiles 18 disposed at a series of workstations 12. A Y-axis may be considered to be along the planar width of the tile 18, i.e., in a perpendicular direction from the X-axis. A Z-axis may be considered to be a vertical axis of the tile 18. Thus, with respect to Figure 1, the movers 14 may move from workstation 12 to workstation 12 along the X-axis; may move to and from a particular workstation 12 along the Y-axis; may move up and down with respect to a particular workstation 12 along the Z-axis; and combinations thereof. As used herein pitch ("Pi") may be considered rotation about the Y-axis, i.e., X-Z movement; roll ("Ro") may be considered rotation about the X-axis, i.e., Y-Z movement; and yaw ("Ya") may be considered rotation about the Z-axis, i.e., X-Y movement.

While seven workstations 12 are illustrated in Figure 1 about a series of tiles 18, the present disclosure is not limited to such a number of workstations 12. Indeed, any suitable number, configurations, and orientations of workstations may suitably be used. Further, while the workstations 12 in Figure 1 are depicted as having one print station 26, the present disclosure is not so limited. As described herein below the workstations 12 may include other components in place of or in addition to the print stations 26 and/or print heads 30. Moreover, the above-described controlled and varied tile movements may be used to position an article or container proximal, including juxtaposing proximal, to such other components. Still furthermore, a tile 18 may have multiple movers 14 disposed thereover, and a mover 14 may have multiple holders 16 for accommodating multiple articles or containers.

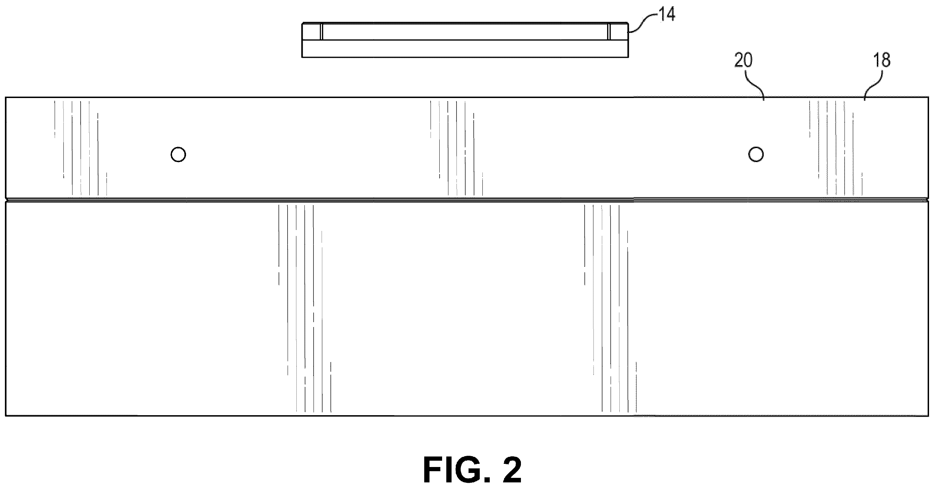

Figure 2 is a partial side elevational view of the mover 14 and the tile 18. As depicted in Figure 2, during normal use the mover 14 is disposed slightly away from, typically above, the surface 20 of the tile 18. As such the mover 14 floats above the surface 20 of the tile 18. The floating of the mover 14 above the tile 18 and the movement of the mover 14 about the surface 20 of the tile is 18 is controlled by magnetic forces. As such during normal use there is no direct contact between the mover 14 and the tile 18 thereby providing provide contactless movement therein between.

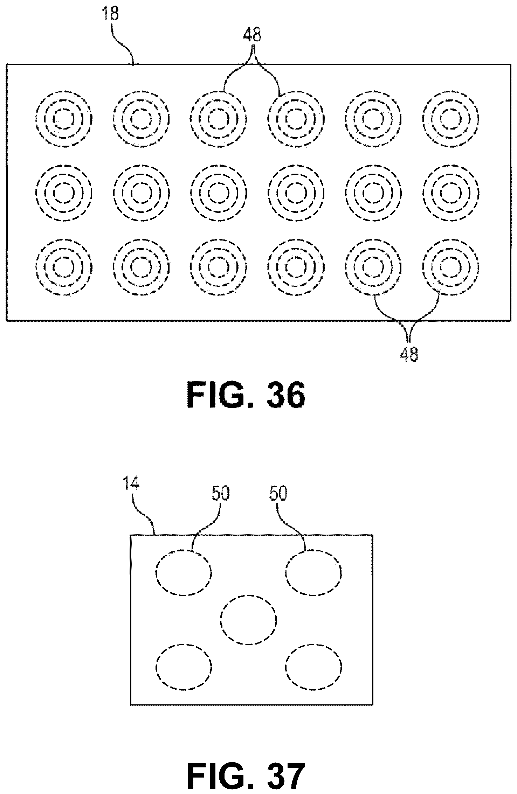

The tile 18 includes multiple stationary, energizing coils 48 as depicted in Figure 36. The coils 48 may disposed in a two-dimensional plane within the tile 18. The mover 14 includes permanent magnets 50 as depicted in Figure 37. The permanent magnets 50 may be disposed in a two-dimensional plane within the mover 14. Both the coils 48 and the permanent magnets 50 are typically arranged two-dimensional planes. The tile 18 is an electrically active part of the system with the current in the coils allowing the mover 14 to float above the tile 18. The mover 14 may be a mechanically floating, freely movable component, desirably a wireless component. In other words, the mover 14 is not mechanically connected to the tile 18. The mover 14 may be configured as a passive component in that it has no moving parts or connections. The tile 18 may be configured as an integrated drive unit which converts supplied energy into regulated electromagnetic fields. These fields are configured to allow the mover 14 to float above the tile 18 but also guide the mover 14 selectable waypoints or navigation points. The tile 18 may further include associated power electronics, position detector, power supply, and wireless control communication.

The configurations for the tiles 18 and the movers 14 may vary according to the desired application. Commercially available tiles vary in size. Square-shaped tiles are commercially available from about 320 mm to 240 mm width and length with heights about 67 mm to 98 mm. Rectangular-shaped, for example 160 mm by 320 mm, are also commercially available. Commercially available movers also vary in size. Square shaped movers are commercially available from about 100 mm to 235 mm width and length with heights typically being about 12 mm. Rectangular-shaped, for example 115 mm by 155 mm and 155 mm by 235 mm, are also commercially available. Commercially available movers may handler payloads from about 0.6 kilograms to about 4.5 kilograms. These dimensions, shapes, and payloads are non-limiting and may be varied as desired. Controllable mover and tile systems are available from, for example, Beckhoff Automation LLC, Savage, MN, USA (XPlanar System) and B&R, a member of the ABB Group, Roswell, GA, USA (Acopos 6D).

Although the tiles 18 are depicted in a straight linear orientation in Figure 1, the tiles 18 may be disposed in any desirable configuration including different horizontal configurations, bespoken configurations, angular configurations, and vertical configurations.

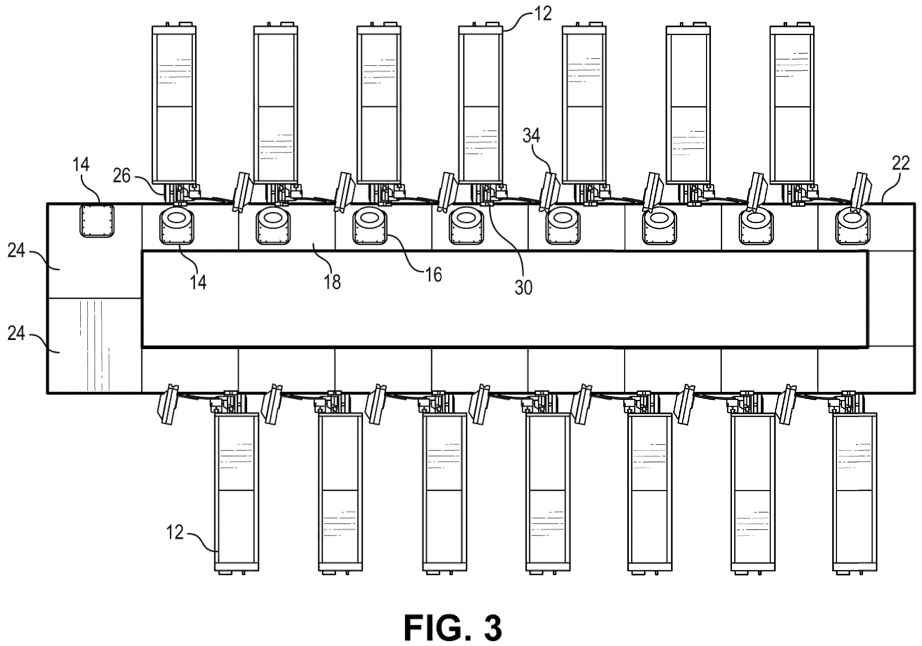

Figure 3 depicts one configuration of workstations 12, movers 14, and tiles 18. The tile array 22 has a plurality of tile in a spaced apart rectangular configurations. A portion 24 of the tile array 22 may include a suitable location for loading of articles for printing and subsequent unloading of the articles. Further as depicted in Figure 3, a vision camera or vision station 34 may be associated with a workstation 12.

A plurality of tiles 18 may be arranged into the tile array 22 to provide a base or a platform over which the movers 18 may levitatingly float and travel there over and about which workstations 12 may be suitably disposed. The movers 14 may controllably move along a tile and from tile to tile. While the tile array 22 is depicted as an open rectangular platform, the present invention is not so limited. Any useful orientations of the tile 18 may be provided to vary the orientation or shape of the platform or tile array 22. For example, the tiles 18 in the tile array 22 may be disposed in any orientation to provide an overall array in the shape of a rectangular, square, or other polygon, including perimeters thereof, a line, multiple lines, and combinations thereof.

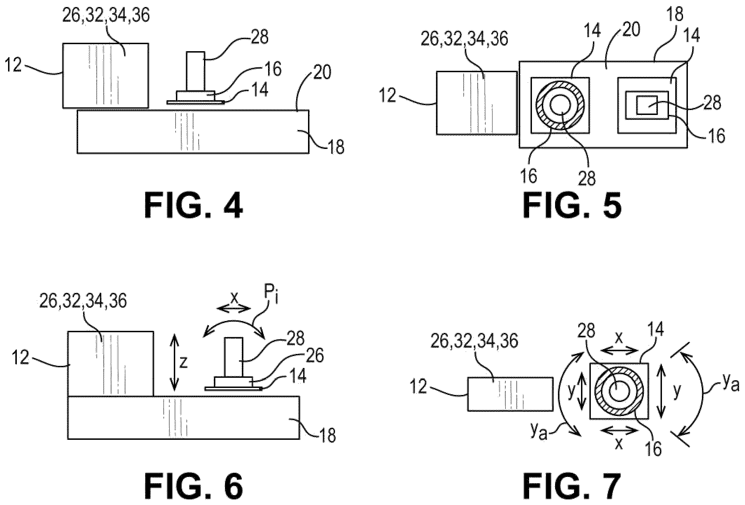

Figures 6-22 schematically depict various motions useful with the magnetic levitating mover system 10 of the present invention. The various motions may controllably move article or container 28 to a plurality of workstations 12 having different functions. For example workstations 12 may include, for example, a print station 26, a curing lamp or curing station 32, a vision camera or vision station 34, and/or a treater or treater station 36, or even combinations thereof.

The movers 14 are configured to move product proximally towards a workstation 12 and from workstation 12 to workstation 12. As depicted in Figure 4, a mover 14 has an article or product 28 releasably disposed within a tooling or holder 16 associated with the mover 14. The mover 14 with the article or product 28 is disposed above an upper surface 20 of the tile 18. A workstation 12, such as a print station 26, a curing lamp or curing station 32, a vision camera or vision station 34, and/or a treater or treater station 36, may be proximally disposed towards the tile 18. The tooling or holder 16 may be any suitable mechanical holder, such as a slip fit configuration, a press fit configuration, a clamp configuration, including an overhead clamp configuration. The tooling or holder 16 may include two movers 14 each with a mating holding part such that when two such movers 14 are moved towards one and another, the article 28 is securable disposed therein between.

As depicted in Figure 5, the article or product 28 may vary in size and configuration. Accordingly, the tooling or holder 16 may vary in size and configuration for releasably securing the article or product 28. As depicted in Figure 5, the article or product 28 may be round or rectangular in shape. The shape of the holder 16 may match shape of the article or product 28. The present disclosure is not so limited and article 28 and holder 16 shapes may vary as desired. The tooling or holder 16 for the article or product 28 may also vary depending upon the particular application or use of the system 10.

The tooling or holder 16 may be mounted or fixed, including releasably mounted or fixed, to the mover 14 by any suitable means. For example, the tooling or holder 16 may be mounted or fixed to the tile 18 through the use of a fastener or fasteners, adhesive or glue, and/or magnets to name a few.

The article or product 28 may be any container having a shape with curved surfaces, such as oblong, oval, spherical, cylindrical, torus-shaped, egg-shaped, bowl-shaped, tube-shaped, etc. The article or container 28 is not limited to curved shapes, and other shaped articles or containers may be used with the system 10 of the present disclosure. For example, a non-limiting shapes may include cubes, pyramids, cones, prisms, 3-D rectangles or cuboids or any suitable polyhedrons.

The container, article, or product 28 may be made of or include any useful material or materials, such as plastic, glass, metal, ceramic, cardboard, plant-based resins, etc. Such materials may form the surface onto which artwork, words, etc. may be directly printed thereon. Non-limiting examples of a plastic container having a surface to be printed thereon include polyethylene terephthalate (PET) and high density polyethylene (HDPE), which may be made with monolayer or multilayer plastic materials. Articles with such materials may include, for example, aluminum cans or bottles; plastic or glass bottles, including wine bottles; cardboard boxes or containers; plastic, glass, metal, or ceramic plates, cups, glasses, or bowls, etc.

The number of print stations 26 in the printing system 10 may vary as needed, e.g., from one or more as needed. The print stations 26 may include multiple colors that may be used in printing technology to make a final desired color. The multiple colors may include, for example, white, cyan, magenta, yellow, black, metallic-type colors, etc. Moreover, individual spot colors may also be used at each station 26. Further, the print stations 26 may include a station or stations for the application of a varnish, a protective coating, a primer for enhanced ink adhesion, etc. The time in front of each station 26 may vary depending on the artwork to be printed and the print speed for optimal quality.

The use of the levitating movers 14 and tiles 18 for direct printing on the article or product 28 allows for flexibility in any particular printing application. For example, the printing system 10 may have the ability to skip individual print stations 26 if that color print is not needed as each mover 14 may be independently controlled. Further, the printing system 10 may have the ability to do single pass or multiple passes by the print station 26. Moreover, the printing system 10 may have the ability to do "in and out motion" of the movers 14 in front of the print heads 30 for oval shaped or odd shaped articles or parts.

Further, as the printing system 10 may have multiple tiles 18, movers 14, and print stations 26 that can be independently controlled, the system 10 may multi-print on multiple surfaces at the same time. For example, front portions, back potions, and/or top portions may be printed at the same time or substantially simultaneous on same article or product 28 or even on multiple articles or products 28.

The system 10 may have an ability to print at a constant speed and non-constant or variable speed, and/or move articles at constant speed or have varying speeds when moving. The system 10 may have an ability to have many movers with ability to vary artwork and product for such things as decorate on demand. Movers could take first product or article and apply artwork "A". Then the system 10 could use same product or article or even an alternate product or article and apply artwork "B". Thus, the system 10 allows the artwork to be personalized on demand.

After printing artwork on the articles or products 28, the ink may often require curing. Useful curing applications may include any useful method of curing depending on the application. For example, ultraviolet light (UV), visible light or a combination of ultraviolet and visual light may be used for curing the printed artwork on the articles or products 28. UV light-emitting diode (LED) lamps, mercury vapor lamps, and the like may suitably be used.

The number of cure stations 32 in the printing system 10 may vary depending on how much cure is needed for the specific product/artwork. Further, the time near each station 32 can vary depending on how much cure is needed for the specific product/artwork. As the movers 14 may be individually controlled, an individual cure station 32 for a certain part may be skipped as necessary. Further, the mover 14 may be controlled for single or multiple passes by the cure station 32 depending on how much cure is needed for the specific product/artwork. Further, the movers 14 may be configured for "in and out motion" near the curing stations 32, which may be useful for oval shaped or odd shaped articles, parts, containers, etc. As the system 10 may contain a plurality of cure stations 32, multiple surfaces on multiple articles 28 may be cured at about the same time. For example, the front, back, and top of an article 28 may all be all once, i.e., at about the same time at, for example, an individual cure station 32.

In one aspect of the disclosure vision inspection on an artwork printed on the article 28 is possible using vision stations 34 of the system 10. Visual inspection may be used to determine quality of prints in accordance with, for example, the standards of customers. The number of cameras, types of cameras, types of inspection, and locations of camera may vary. If desired, the system 10 may be configured to provide vision on the article 28 while other functions are being performed.

Non-limiting vision and vision techniques may include, for example, spectrophotometry, pattern match, pixel count, optical character recognition (OCR), etc.

The vision camera or vision station 34 are useful in a variety of applications, for example, visual inspection for defects, fill level assessment, container integrity check, barcode and data matrix reading, liquid color and transparency inspection, foreign object detection, print quality assessment, dimensional measurement, presence/absence verification, surface inspection, cap and seal integrity check, batch number and expiry date verification, tamper-evident feature assessment, liquid volume measurement, alignment and position verification, over-fill/under-fill detection, vial height measurement, meniscus detection, general quality control inspection, etc.

The system 10 may optionally include treater or treatment station for pre-treating the article 28. Generally, plastics have chemically inert and nonporous surfaces with low surface tensions. Such surfaces may be non-receptive to bonding with inks. Such surfaces, however, may be pre-treated to affect a change in surface energy to make the surface amenable to bonding with or cross-linking with the inks. Pre-treatment may involve the application of energy to the surface of plastic. Common surface treatments may include, for example, the use of corona, flame, plasma, etc. Chemical pre-treatment may also be used by, for example, the application of a chemical primer or the like. Pre-treatment, if desired, of the articles 28 may be performed prior to the introduction of the articles 28 into the system 10, or alternatively, the system 10 may include treater or treater stations 36.

The number of pre-treatments of the degree of pre-treatment may vary depending on how much cure is needed for the specific product/artwork. The time at or proximal to the treater or treater station 36 may vary as needed, for example, from about a millisecond and greater. If the treater or treater station 36 is disposed within the system 10, individual treaters or treater stations 36 may be skipped or bypassed for certain articles as each mover 14 is independently controlled. Pre-treatment may be a single pass treatment or multiple treatment passes. Pre-treatment may be done on multiple surfaces at the same time, for example, front, back, and top all at once or substantially at the same time on same article. The movers 14 may allow for "in and out motion" in front of or proximal to the treater or treater station 36 for oval shaped or odd shaped parts.

As described above, the movers 14 may move towards, away from, turn, tilt and/or rotate with respect to a print station 26, a curing lamp or curing station 32, a vision camera or vision station 34, and/or a treater or treater station 36. For example, the movers 14 may turn and rotate in front of the print heads 30 at the printing station 26 for printing normal to a surface of the article or product 28.

Figure 6 schematically depicts a side view of possible or desirable X-Z movement of the mover 14 or article/product 28 with respect to the print station 26, the curing lamp or curing station 32, the vision camera or vision station 34, and/or the treater or treater station 36. The mover 14 with the article or product 28 may move vertically upward or elevate and move vertically downward with respect to the tile 18 as indicated by the Z-vector. Further, the mover 14 with the article or product 28 may move laterally or in a side-to-side motion with respect to the print station 26, the curing lamp or curing station 32, the vision camera or vision station 34, and/or the treater or treater station 36 as indicated by the X-vector. Moreover, the mover 14 with the article or product 28 may rotate side-to-side as indicated by the Pi vector. Such rotation may be referred to a pitch as rotation may be about the Y-Y axis. Thus, as depicted in Figure 6, "X", "Z", and/or "Pi" motions are available for controllably moving the mover 14 with the article or product 28 proximally towards and/or distally away from the print station 26, the curing lamp or curing station 32, the vision camera or vision station 34, and/or the treater or treater station 36 or other workstation 12 having an additional function.

The Figure 7 schematically depicts a top view of possible or desirable X-Y movement of the mover 14 with the article or product 28 with respect to the print station 26, the curing lamp or curing station 32, the vision camera or vision station 34, and/or the treater or treater station 36. The mover 14 with the article or product 28 may move laterally or in a side-to-side motion with respect to the print station 26, the curing lamp or curing station 32, the vision camera or vision station 34, and/or the treater or treater station 36 as indicated by the X-vector. Further, the mover 14 with the article or product 28 may move traversingly or crossingly with respect to the print station 26, the curing lamp or curing station 32, the vision camera or vision station 34, and/or the treater or treater station 36. Still further the mover 14 with the article or product 28 may rotate side-to-side as indicated by the Ya vector. Such rotation may be referred to a yaw as rotation may be about the Z-Z axis. Thus, as depicted in Figure 7, "X", "Y", and/or "Ya" motions are available for controllably moving the mover 14 with the article or product 28 proximally towards and/or distally away from the print station 26, the curing lamp or curing station 32, the vision camera or vision station 34, and/or the treater or treater station 36 or other workstation 12 having an additional function.

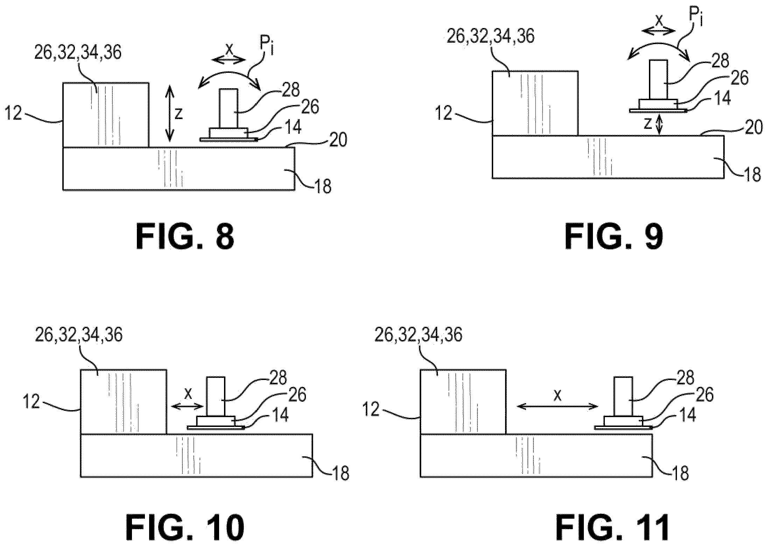

Figures 8 and 9 schematically depict side views of possible or desirable X-Z movements of the mover 14 with the article or product 28 with respect to the print station 26, the curing lamp or curing station 32, the vision camera or vision station 34, and/or the treater or treater station 36. The mover 14 with the article or product 28 may move vertically upward or elevate and move vertically downward with respect to the tile 18 as indicated by the Z-vector. This is indicated by the difference in elevation of the mover 14 with the article or product 28 with respect to the tile 18 between Figures 8 and 9. Further, the mover 14 with the article or product 28 may move laterally or in a side-to-side motion with respect to the print station 26, the curing lamp or curing station 32, the vision camera or vision station 34, and/or the treater or treater station 36 as indicated by the X-vector. Moreover, the mover 14 with the article or product 28 may rotate side-to-side as indicated by the Pi vector. Such rotation may be referred to a pitch as rotation may be about the Y-Y axis. Thus, as depicted in Figures 8 and 9, X-motions, Z-motions, and/or Pi-motions (tilting and/or rotations) are available for controllably moving the mover 14 with the article or product 28 proximally towards and/or distally away from the print station 26, the curing lamp or curing station 32, the vision camera or vision station 34, and/or the treater or treater station 36 or other workstation 12 having an additional function.

Figures 10 and 11 schematically depict side views of possible or desirable X movement of the mover 14 with the article or product 28 with respect to the print station 26, the curing lamp or curing station 32, the vision camera or vision station 34, and/or the treater or treater station 36. As depicted by comparing Figures 10 and 11, the mover 14 with the article or product 28 may be controllably moved laterally towards and away from the print station 26, the curing lamp or curing station 32, the vision camera or vision station 34, and/or the treater or treater station 36, or other workstation 12 having an additional function.

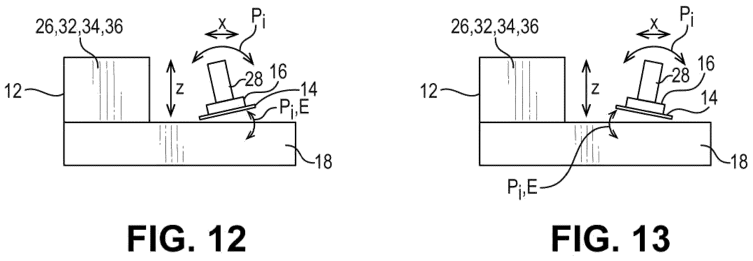

Figures 12 and 13 schematically depict side views of possible or desirable rotational X-Z movement, in particular, side-to-side rotational movement or pitch (Pi) movement of the mover 14 with the article or product 28 with respect to the tile 18 and/or the print station 26, the curing lamp or curing station 32, the vision camera or vision station 34, and/or the treater or treater station 36. As depicted in Figures 12 and 13, such combined X-Z movement or pitch (Pi) rotation may elevate (upward or downward), as indicated by vector "E", portions of the mover 14 with the article or product 28 with respect to the tile 18 or the print station 26, the curing lamp or curing station 32, the vision camera or vision station 34, and/or the treater or treater station 36. Although not depicted in Figures 12 and 13, roll and yaw rotational movements are also possible as described herein.

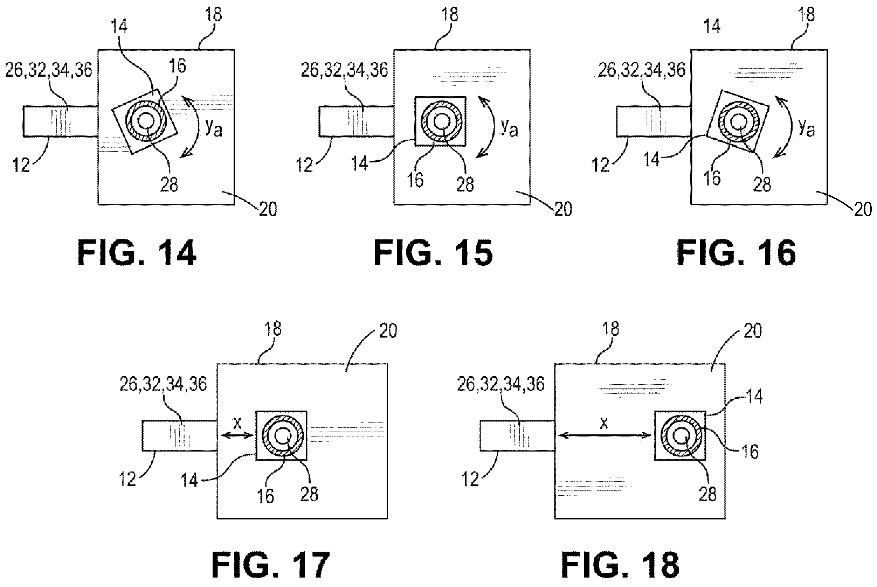

Figures 14, 15 and 16 schematically depict top views of possible or desirable X-Y rotation or yaw movement of the mover 14 with the article or product 28 with respect to the print station 26, the curing lamp or curing station 32, the vision camera or vision station 34, and/or the treater or treater station 36. As depicted in Figures 14, 15, and 16, the mover 14 with the article or product 28 may rotate in an X-Y plane, i.e., rotate about the Z-axis (not shown), which may be described as yaw (Ya) rotation. Although no depicted in these Figures 14, 15, and 16, other movements and rotations are, separately or in combination, are possible with the yaw rotation.

Figures 17 and 18 schematically depict top views of possible or desirable lateral or X-movement of the mover 14 with the article or product 28 with respect to the print station 26, the curing lamp or curing station 32, the vision camera or vision station 34, and/or the treater or treater station 36. As depicted in Figures 17 and 18, the mover 14 with the article or product 28 may controllably move laterally towards and/or away from the print station 26, the curing lamp or curing station 32, the vision camera or vision station 34, and/or the treater or treater station 36. Although no depicted in these Figures 17 and 18, other movements and rotations are, separately or in combination, are possible with the lateral or X movement.

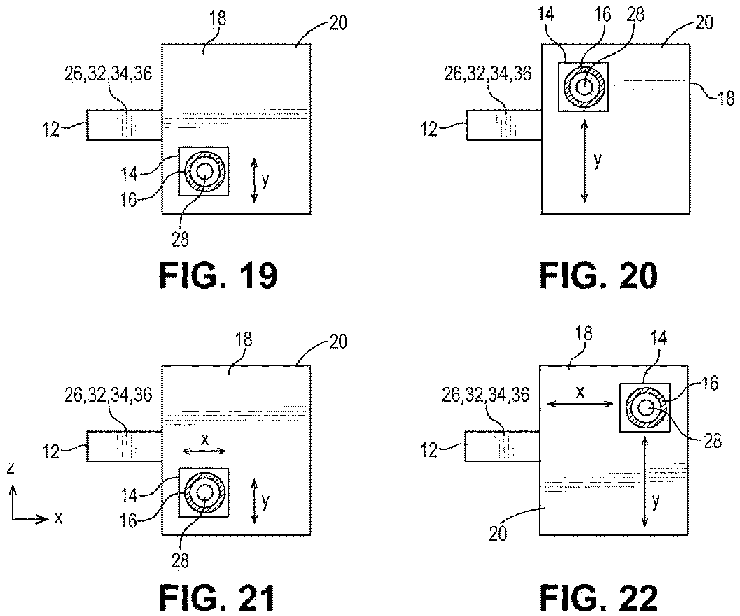

Figures 19 and 20 schematically depict top views of possible or desirable Y-movement of the mover 14 with the article or product 28 with respect to the print station 26, the curing lamp or curing station 32, the vision camera or vision station 34, and/or the treater or treater station 36. The Y-movement is in a traverse direction with respect to the print station 26, the curing lamp or curing station 32, the vision camera or vision station 34, and/or the treater or treater station 36, such as a direction substantially perpendicular to lateral or X-movement. Although no depicted in these Figures 19 and 20, other movements and rotations, separately or in combination, are possible with the Y-movement.

Figures 21 and 22 schematically depict top views of possible or desirable X-Y movement of the mover 14 with the article or product 28 with respect to the print station 26, the curing lamp or curing station 32, the vision camera or vision station 34, and/or the treater or treater station 36. Thus, lateral or X-movement and transverse or Y-movement of the mover 14 with the article or product 28 about the tile 18 with respect to the print station 26, the curing lamp or curing station 32, the vision camera or vision station 34, and/or the treater or treater station 36 are controllably provided with the system 10. Although no depicted in these Figures 21 and 22, other movements and rotations, separately or in combination, are possible with the X-Y movements.

Thus, as depicted in Figures 6 to 22, the levitating mover 14 may move the article or product 28 above the surface 20 of the tile 18 in any X-Y-Z directions, combinations of X-Y-Z directions, and rotations or tilts about any X-Y-Z directions, including proximally towards, in front of, and/or distally away the print station 26, the curing lamp or curing station 32, the vision camera or vision station 34, and/or the treater or treater station 36. The levitating mover 14 allows the article or product 28 to move at relatively similar or constant distance and velocity in front of the print station 26, the curing lamp or curing station 32, the vision camera or vision station 34, and/or the treater or treater station 36, including the print heads 30. Further for a shaped, non-round article or product 28 the mover 14 may move the article or product 28 towards and away from the print station 26, the curing lamp or curing station 32, the vision camera or vision station 34, and/or the treater or treater station 36, including the print head 30, to keep the distance and/or velocity relatively constant.

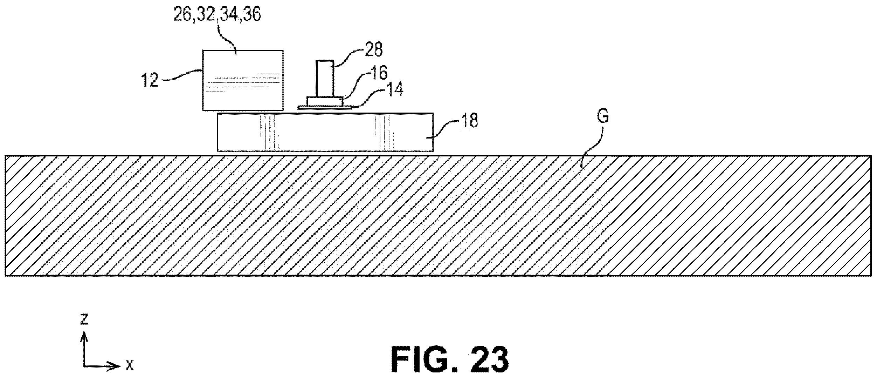

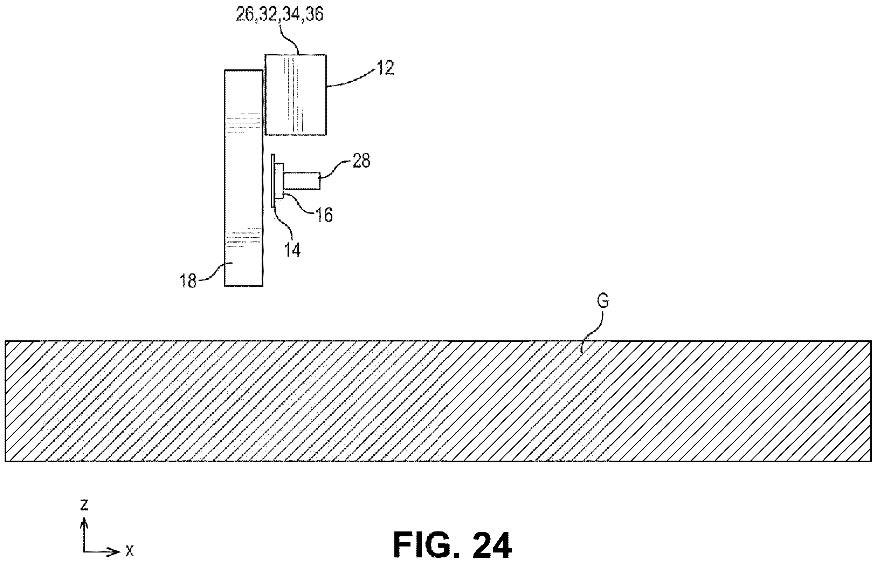

Figures 23-26 schematically depict various orientations of the system 10 relative to grade or ground. Structure for disposing or securing the tiles 18 in vertical and/or upside-down orientations are not shown but may be suitably designed. As depicted in Figure 23, the tile 18 and the mover 14 with the article 28 may be orientated horizontally, including substantially horizontally, with respect to ground or grade "G". The grade or ground "G" may be any industrial surface, such as a building floor or a substrate, including, if desired, elevated substrates. The workstations 12, such as the print station 26, the curing lamp or curing station 32, the vision camera or vision station 34, and/or the treater or treater station 36, may also be orientated horizontally, including substantially horizontally, with respect to ground or grade "G". The mover 14 with the article 28 is depicted as being above the tile 18, but other orientations may suitable be used (cf. Figures 24-26). The mover 14 may move in any of the above-described six dimensions with respect to ground or grade "G". The workstation 12, including the print station 26, the curing lamp or curing station 32, the vision camera or vision station 34, and/or the treater or treater station 36, however, is not limited to being orientated horizontally. As long as the mover 14 is configured to move the article 28 suitably proximal to the print station 26, the curing lamp or curing station 32, the vision camera or vision station 34, and/or the treater or treater station 36, including, for example, any associated print head 30, the orientation of the system 10 may vary.

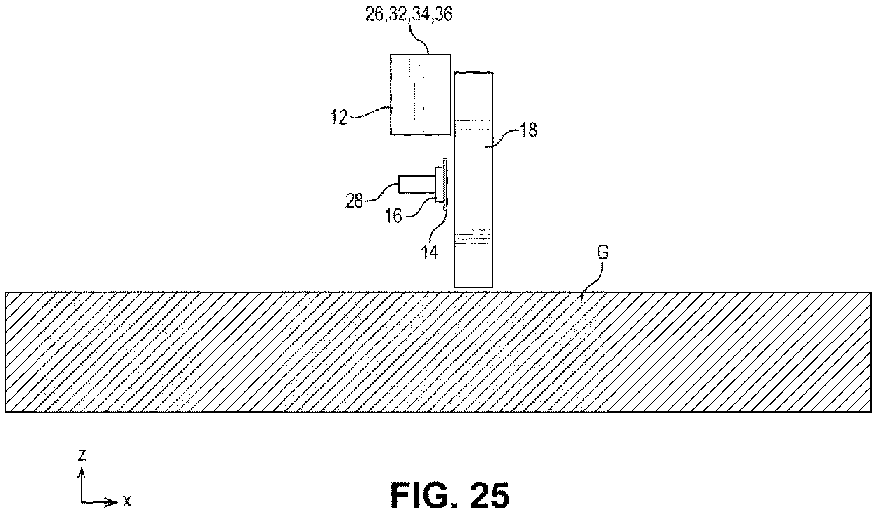

As depicted in Figure 24, the tile 18 and the mover 14 with the article 28 may be orientated vertically, including substantially vertically, with respect to ground or grade "G". If desired, the workstation 12, such as the print station 26, the curing lamp or curing station 32, the vision camera or vision station 34, and/or the treater or treater station 36, may also be orientated vertically, including substantially vertically, with respect to ground or grade "G". The mover 14 may move in any of the above-described six dimensions with respect to ground or grade "G". The print station 26, the curing lamp or curing station 32, the vision camera or vision station 34, and/or the treater or treater station 36, however, are not limited to being orientated vertically. As long as the mover 14 is configured to move the article 28 suitably proximal to the print station 26, the curing lamp or curing station 32, the vision camera or vision station 34, and/or the treater or treater station 36, including, for example, any associated print head 30 (not shown), the orientation of the workstation 12 may vary. As depicted in Figure 24, the tile 18 may be disposed vertically at any desired vertical distance above grade or ground "G". The present invention, however, is not so limited. For example, as depicted in Figure 25, the tile 18 may be orientated vertically, including substantially vertically, with respect to ground or grade 38 and proximally disposed near grade of ground "G", i.e., little or miminal elevation above grade "G".

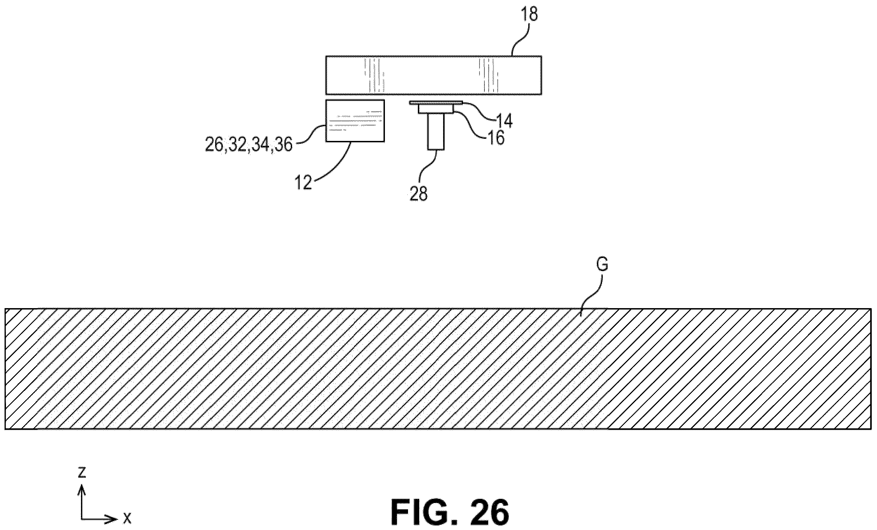

As depicted in Figure 26, the tile 18 and the mover 14 with the article 28 may be orientated horizontally, including substantially horizontally, in an upside-down configuration with respect to ground or grade "G". The mover 14 may move in any of the above-described six dimensions with respect to ground or grade "G".

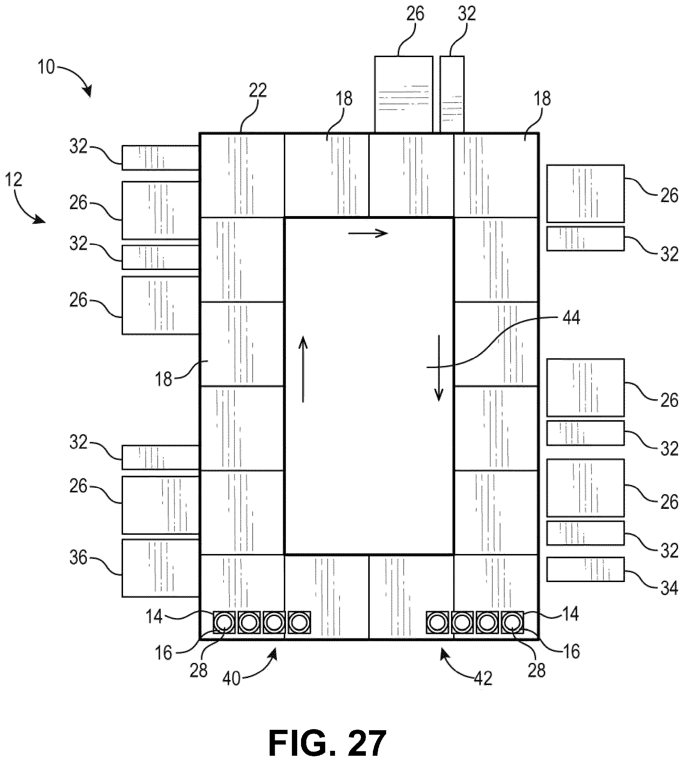

Figures 27-33 schematically depict various configurations of workstations 12, such as print station(s) 26, treater station(s) 36, vision station(s) 34, curing stations 36, and/or treater station(s) 36, disposed about arrays 22 of tiles 18.

As depicted in Figure 27, a mover 14 with multiple articles or products 28 or multiple movers 14 each with an article or product 28 may be loaded into the tile array 22 at a loading area 40. As depicted in Figure 27, an 4 x 1 array of product 28 are loaded onto a 4 x 1 array of movers 14. If desired, the loading area 40 may be configured to load the article or product 28 into the tile array 22 and onto to the mover 14 for securing the article or product 28 with in the tooling or holder 16. The movers 14 may then move independently of each other along the tile array 22, including in any of the above-described movements, rotations, and/or tilts. The movers 14 may then be returned to the 4 x 1 array at the unloading area 42 of the tile array 18 for discharge or removal from the system 10 or tile array 22. The tile array 22 may be a closed-loop configuration as depicted in Figure 27. The present disclosure, however, is not limited to a closed-loop tile array and an open or discontinuous tile array loop may be used.

While two columns of six tiles 18, joined by two tiles 18 at the top and bottom of the columns of tiles 18, are depicted in Figure 27, the number and configuration of tiles may vary as desired. The movers 14 move in a general clockwise directions along the tile array 22 from the loading area 40 to the unloading area 42.

As depicted in Figure 27, the printing system 10 may include a plurality of print stations 26. The mover 14 may move the article or product 28 along a tile or tiles 18 to a suitable printing configuration, including the above-described six dimensional movements proximal to the print stations 26. After printing at a particular print station 26, the mover 14 may move the article or product 28 to a curing station 32. Typical, multiple printing stations 26 and curing stations 32 are provided to print different artworks, including different colors, etc. As depicted in Figure 23, the system 10 may include seven print stations 26 and curing stations 32. The number of print stations 26 and curing stations 32 may be varied as needed. Further, not every tile 18 in the tile array 22 needs to be associated with a workstation 12. For example, a tile 18 may simply not have an associated workstation 12 depending upon the printing requirements for the particular product 28. Furthermore, more that one workstation 12 may be associated with any particular tile 18.

The system 10 may also contain a vision station 34. One such vision station is depicted in Figure 27 near the unloading area 42. The number of vision stations 34, however, may vary as needed, including at different locations within the tile array 22. A vision station 34, while desirable, is optional.

The system 10 may also optionally contain a treater station 36. Pre-treatment or treatment of the article 28 may be done within the tile array 22 as shown in Figure 27 proximal to the loading area 40. The present disclosure, however, is not so limited, and the pre-treatment or treatment of the article 28 may be done prior to entry into the tile array 22 or prior to entry into the loading area 40.

Thus, the numbers and types of workstations 12 may vary as desired.

As depicted in Figure 27, the tile array 22 may have an open space 44, i.e., a space free of tiles 18. Such an open space may be useful for positioning workstations 12 or other components thereat.

The present invention is not limited to just the above-described workstations 12, such as print stations 26, curing stations 32, and/or vision stations 34. Any useful workstation for processing containers may be configured to work in or with the system 10 of the present invention. For example, if a chemical primer is required, then a workstation for the application of a chemical primer may be provided. As another non-limiting example, a reject workstation may be provided. Such a reject workstation may be included anywhere along the tile array 22, including tiles 18 at the unloading area 42, or even the loading area 40. Thus, the system 10 of the present invention with the use of movers 14, tiles 18, including tile arrays 22, offer flexibility for preforming many desired functions on an article or container 28.

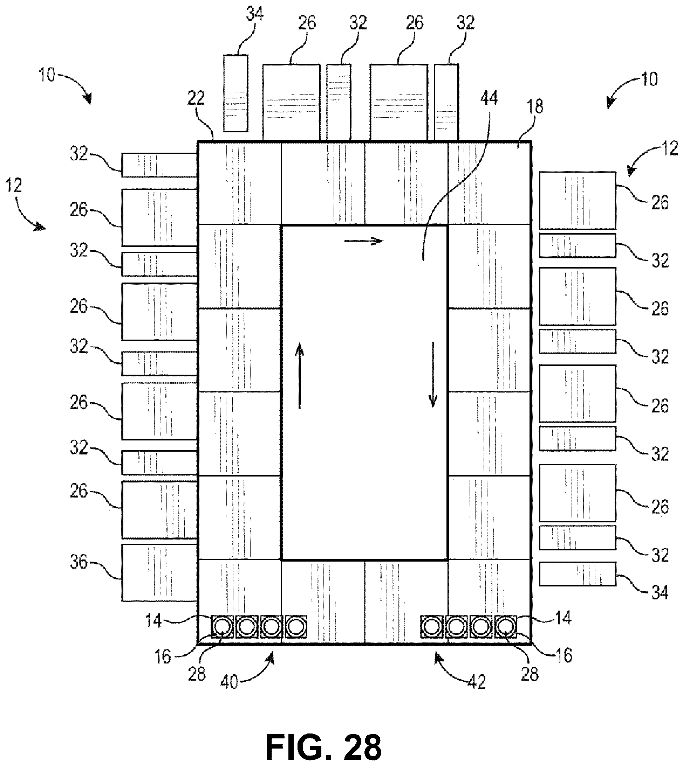

Figure 28 schematically depicts another configuration of workstations 12 and tile array 22. The system 10 depicted in Figure 28 has the same number and orientations of tiles 18 as depicted in Figure 27. The number of workstations 12 in Figure 28 is greater than the number of workstations 12 in Figure 27. For example, ten print stations 26 and ten curing stations 32 with two vision stations 34 and one treater station 36 are depicted in Figure 28. Thus, the number of workstations 12 may vary among common tile arrays. Further, any particular tile 18 in the tile array 22 may be free of a workstation 12 or may have multiple workstations 12 proximally disposed thereat. The vision station 34 proximal to the unloading area 42 may optionally be a final inspection vision station 34. Again the treater station 36 is optional, but if present may be proximal disposed towards the loading area 40 within the array 22.

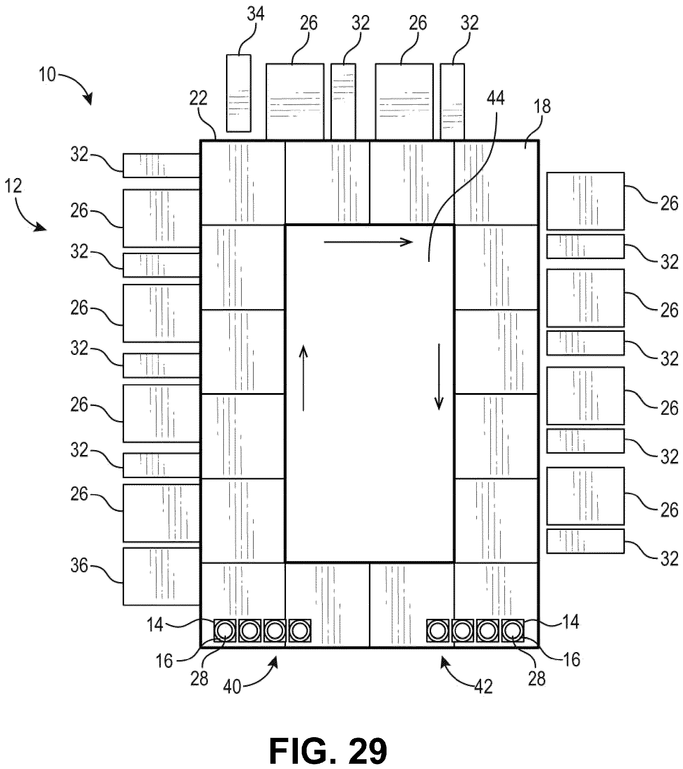

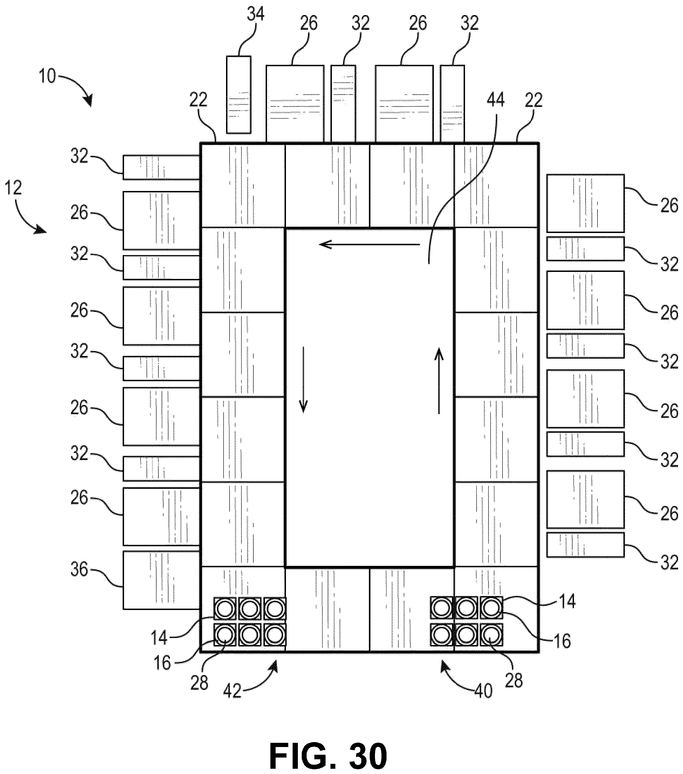

The system 10 in Figure 29 is similar to the system 10 of Figure 28, except that only one vision station 34 is depicted. Further, clockwise arrows are depicted to illustrate the clockwise movement of the movers 14 with the articles 28 along the tile array 22. Counterclockwise movement is also possible, but the configuration or the arrangement of the different workstations 12 may be changed as necessary. See fore example Figure 30 illustrating counterclockwise mover movement.

The system 10 of Figure 29 depicts a 1 x 4 array of articles 28 and movers 14 at the loading area 40 and the unloading area 42. Such an array is non-limiting. For example, a 2 x 3 array of articles 28 and movers 14 at the loading area 40 and the unloading area 42 is depicted in Figure 30. Again within the tile array 22 the movers 14 may be individually controlled to move a particular product 28 proximal to a particular workstation 12. As such the movers 14 are not required to move in unison as a 2 x 3 array along the tile array 22 or along any particular tile 18.

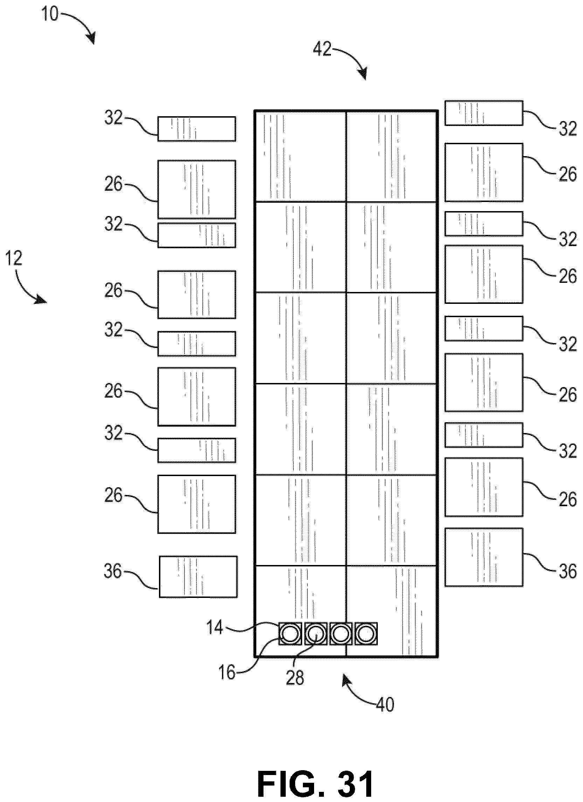

As describe above, the system 10 is not limited to a closed loop tile arrangement. For example, as depicted in Figure 31, the tile array 22 may be in a non-loop or line configuration. Articles 28 on movers 14 may travel from the loading area 40 to the unloading area 42 in, as depicted in Figure 31, non-loop or line configuration. The line configuration may be a straight line configuration as illustrated in Figure 31, but the present invention is not so limited. The non-looped configuration may have staggered tiles to offer flexibility in positioning of the tiles 18 in the tile array 22. The number, type and orientations of the workstations 12 may also vary as desired. While no open space within the tile array 22 is depicted, the present disclosure is not so limited.

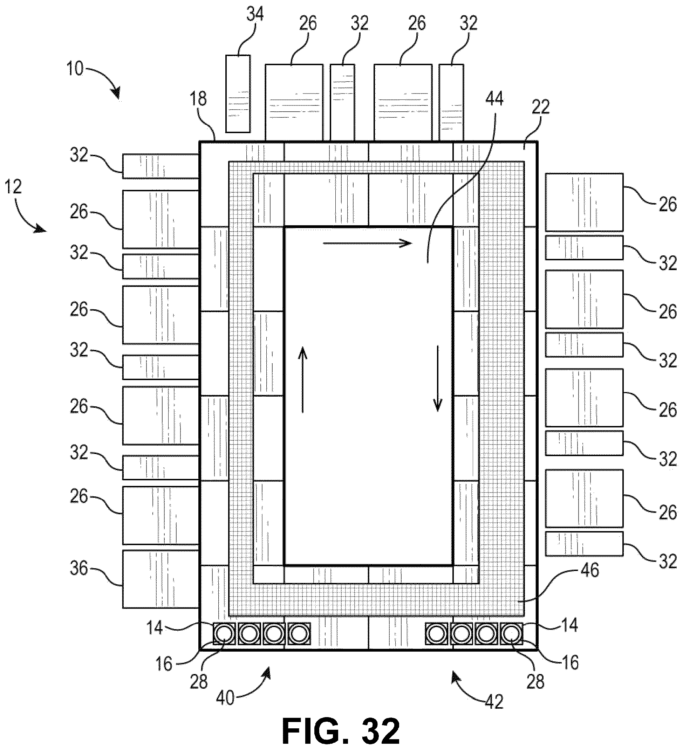

Figure 32 depicts a configuration of the system 10 including a guide member or beam 46. The guide member or beam 46 may be useful for providing an overhead guiding, securing, and/or clamping feature to the system 10. Such a feature 46 is useful for keeping the article 28 reasonably in place within the tile array 22 while still allowing for the above-described six degrees of motion. For example, the feature 46 may be a beam simply for guiding the articles 28 and the movers 14 along the tile array.

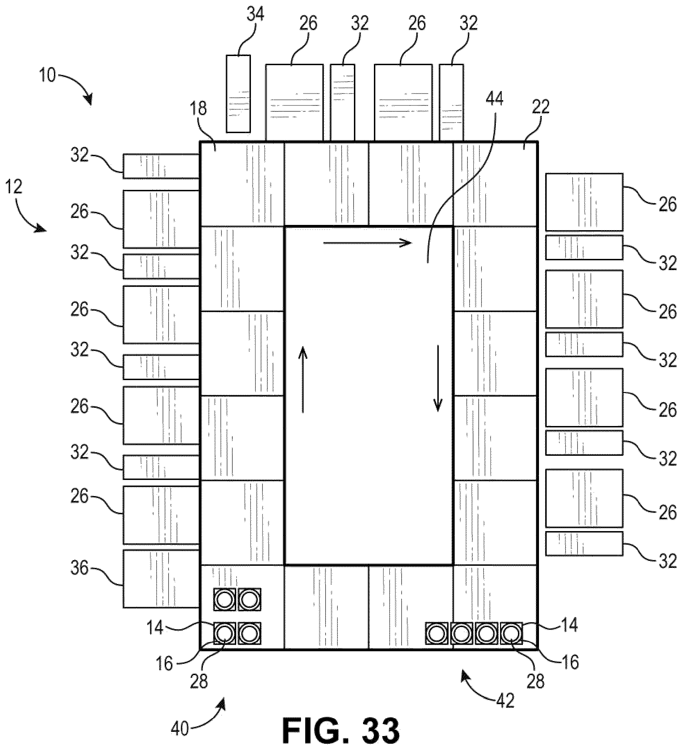

Figure 33 schematically depicts different arrays of the articles 28 and the movers 14. For example, there may be a different array of articles 28 and movers 14 at the loading area 40 as compared to the unloading area 42. As depicted in Figure 33, there may be 2 x 2 arrays of articles 28 and movers 14 at the loading area 40 and 1 x 4 arrays of articles 28 and movers 14 at the unloading area 42. As the individual movers 14 with the articles 28 may be individually controlled, the loading area 40 and the unloading area 42 may have any suitable of arrays of articles 28 and movers 14 or may not have arrays of articles 28 and movers 14, i.e., individually paired articles 28 and movers 14.

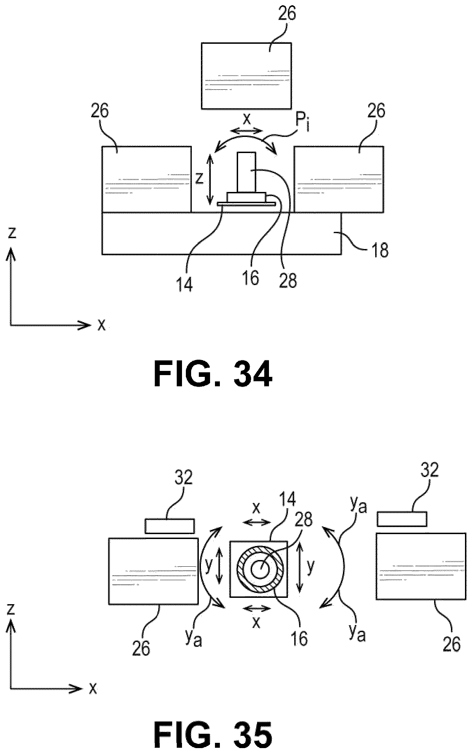

Figures 34 and 35 schematically depict the use of multiple workstations 12, such as print stations 26, to print on multiple planes or surfaces of the article 28 at the same time or substantially the same time. For example, Figure 34 depicts multiple print stations 26 about a tile 18 having an article showing a side view of X-Z movement, including pitch (Pi) tilting or rotation. Figure 35 depicts multiple print stations 26 and cure stations 32 showing a top view of X-Y movement, including yaw (Ya) tilting or rotation, among print and curing stations 26, 32 above a tile (not shown). Further, multiple workstations 12 may include any combination of print stations 26, curing stations 32, vision stations 34, and/or treater stations 36.

In general, the foregoing description is provided for exemplary and illustrative purposes; the present invention is not necessarily limited thereto. Rather, those skilled in the art will appreciate that additional modifications, as well as adaptations for particular circumstances, will fall within the scope of the invention as herein shown and described and of the claims appended hereto. Further, any of the embodiments or aspects of the invention as described in the claims or in the specification may be used with one and another without limitation.

Further, the following embodiments or aspects of the invention may be combined in any fashion and combination and be within the scope of the present invention, as follows:
Embodiment 1. A system (10) for direct printing on a three dimensional article comprising:
   a plurality of print stations (26), each print station (26) comprising a print head (30) for delivering fluid;
   a mover (14) comprising a holder (16) for securing a three dimensional article (28) and at least one magnet (50); and
   a plurality of tiles (18) each comprising energizable coils (48) for producing an electrical field for effecting the at least one magnet (50) in the mover (14) to controllably float the mover (14) about the plurality of tiles (18);
   wherein the plurality of print stations (26) are proximal to at least some of the tiles (18) in the plurality of tiles (18); and
   wherein the mover (14) is configured to have six degrees of motion relative to the plurality of tiles (18) to position a portion of the surface of the three dimensional article (28) proximally normal to the print head (30).
Embodiment 2. The system (10) of embodiment 1, wherein the fluid is selected from the group consisting of ink, varnish, primer, protective coating fluid, and combinations thereof.
Embodiment 3. The system (10) of embodiment 1 or any previous embodiment, wherein the plurality of tiles (18) are arranged in an array (22) of tiles (18).
Embodiment 4. The system (10) of embodiment 3, wherein the array (22) of tiles (18) is a closed loop arrangement of tiles (18).
Embodiment 5. The system (10) of embodiment 3, wherein the array (22) of tiles (18) is a line of tiles (18).
Embodiment 6. The system (10) of embodiment 1 or any previous embodiment, further comprising a plurality of curing stations (32) for curing ink printed on the three dimensional article (28).
Embodiment 7. The system (10) of embodiment 1 or any previous embodiment, further comprising at least one vision station (34) for inspecting the article (28).
Embodiment 8. The system (10) of embodiment 1 or any previous embodiment, further comprising at least one treatment station (36) for pretreating the article (28) prior to printing.
Embodiment 9. The system (10) of embodiment 1 or any previous embodiment, wherein the six degrees of motion include front-to-back linear movement of the mover (14) relative to a surface (20) of the plurality of tiles (18), side-to-side linear movement of the mover (14) relative to said surface (20) of the plurality of tiles (18), vertical movement of the mover (14) relative to said surface (20) of the plurality of tiles (18), rotation around a front-to-back axis of the mover (14) relative to said surface (20) of the plurality of tiles (18), rotation around a side-to-side axis of the mover (14) relative to said surface (20) of the plurality of tiles (18), and rotation around the vertical axis of the mover (14) relative to said surface (20) of the plurality of tiles (18).
Embodiment 10. The system (10) of embodiment 1 or any previous embodiment, wherein the mover (14) is configured to have a controllable velocity and/or acceleration relative to the plurality of tiles (18).
Embodiment 11. The system (10) of embodiment 1 or any previous embodiment, wherein the plurality of tiles (18) are horizontally disposed within the system.
Embodiment 12. The system (10) of embodiment 1 or any previous embodiment, wherein the plurality of tiles (18) are vertically disposed within the system.
Embodiment 13. A method for direct printing on a three dimensional article comprising:
   providing a plurality of print stations (26), each print station (26) comprising a print head (30) for delivering ink;
   providing a mover (14) comprising a holder (16) for securing a three dimensional article (28) and at least one magnet (50);
   providing a plurality of tiles (18) each comprising energizable coils (48) for producing an electrical field for effecting the at least one magnet (50) in the mover (14), wherein the plurality of print stations (26) are proximal to at least some of the tiles (18) in the plurality of tiles (18);
   magnetically levitating the mover (14) away from the plurality of tiles (18);
   controllably moving the levitating mover (14) about the plurality of tiles (18);
   positioning the mover (14) with controlled movement until a portion of the surface of the three dimensional article (28) is proximally normal to the print head (30); and
   printing ink from the print head (30) to the portion of the surface of the three dimensional article (28); wherein the controlled movement of the mover (14) comprises six degrees of motion relative to the plurality of tiles (28).
Embodiment 14. The method of embodiment 13, further comprising: arranging the plurality of tiles (18) into an array of tiles (18).
Embodiment 15. The method of embodiment 13 or any previous embodiments 13-14, further comprising: arranging the plurality of tiles (18) into a closed loop arrangement of tiles (18).
Embodiment 16. The method of embodiment 13 or any previous embodiments 13-14, further comprising: arranging the plurality of tiles (18) into a line of tiles (18).
Embodiment 17. The method of embodiment 13 or any previous embodiments 13-16, further comprising: providing a plurality of curing stations (32); and curing the ink printed on the portion of the surface of the three dimensional article (28).
Embodiment 18. The method of embodiment 13 or any previous embodiments 13-17, further comprising: providing at least one vision station (34); and inspecting the article (28).
Embodiment 19. The method of embodiment 13 or any previous embodiments 13-18, further comprising: providing at least one treatment station (36); and pretreating the article (28) prior to printing.
Embodiment 20. The method of embodiment 13 or any previous embodiments 13-19, wherein the six degrees of motion include front-to-back linear movement of the mover (14) relative to a surface (20) of the plurality of tiles (18), side-to-side linear movement of the mover (14) relative to said surface (20) of the plurality of tiles (18), vertical movement of the mover (14) relative to said surface (20) of the plurality of tiles (18), rotation around a front-to-back axis of the mover (14) relative to said surface (20) of the plurality of tiles (18), rotation around a side-to-side axis of the mover (14) relative to said surface (20) of the plurality of tiles (18), and rotation around the vertical axis of the mover (14) relative to said surface (20) of the plurality of tiles (18).
Embodiment 21. The method of embodiment 13 or any previous embodiments 13-20, further comprising: controlling a velocity and/or an acceleration of the mover (14) relative to the plurality of tiles (18).
Embodiment 22. The method of embodiment 13 or any previous embodiments 13-21, further comprising: horizontally disposing the plurality of tiles (18) within the system.
Embodiment 23. The method of embodiment 13 or any previous embodiments 13-21, further comprising: vertically disposing the plurality of tiles (18) are within the system.

## Claims

1. A system (10) for direct printing on a three dimensional article comprising:
a plurality of print stations (26), each print station (26) comprising a print head (30) for delivering fluid;
a mover (14) comprising a holder (16) for securing a three dimensional article (28) and at least one magnet (50); and
a plurality of tiles (18) each comprising energizable coils (48) for producing an electrical field for effecting the at least one magnet (50) in the mover (14) to controllably float the mover (14) about the plurality of tiles (18);
wherein the plurality of print stations (26) are proximal to at least some of the tiles (18) in the plurality of tiles (18); and
wherein the mover (14) is configured to have six degrees of motion relative to the plurality of tiles (18) to position a portion of the surface of the three dimensional article (28) proximally normal to the print head (30).

2. The system (10) of claim 1, wherein the fluid is selected from the group consisting of ink, varnish, primer, protective coating fluid, and combinations thereof.

3. The system (10) of any previous claim, wherein the plurality of tiles (18) are arranged in an array (22) of tiles (18).

4. The system (10) of claim 3,
wherein the array (22) of tiles (18) is a closed loop arrangement of tiles (18), or
wherein the array (22) of tiles (18) is a line of tiles (18).

5. The system (10) of any previous claim,
further comprising a plurality of curing stations (32) for curing ink printed on the three dimensional article (28); and/or
further comprising at least one vision station (34) for inspecting the article (28); and/or
further comprising at least one treatment station (36) for pretreating the article (28) prior to printing.

6. The system (10) of any previous claim, wherein the six degrees of motion include front-to-back linear movement of the mover (14) relative to a surface (20) of the plurality of tiles (18), side-to-side linear movement of the mover (14) relative to said surface (20) of the plurality of tiles (18), vertical movement of the mover (14) relative to said surface (20) of the plurality of tiles (18), rotation around a front-to-back axis of the mover (14) relative to said surface (20) of the plurality of tiles (18), rotation around a side-to-side axis of the mover (14) relative to said surface (20) of the plurality of tiles (18), and rotation around the vertical axis of the mover (14) relative to said surface (20) of the plurality of tiles (18).

7. The system (10) of any previous claim, wherein the mover (14) is configured to have a controllable velocity and/or acceleration relative to the plurality of tiles (18).

8. The system (10) of any previous claim,
wherein the plurality of tiles (18) are horizontally disposed within the system; or
wherein the plurality of tiles (18) are vertically disposed within the system.

9. A method for direct printing on a three dimensional article comprising:
providing a plurality of print stations (26), each print station (26) comprising a print head (30) for delivering ink;
providing a mover (14) comprising a holder (16) for securing a three dimensional article (28) and at least one magnet (50);
providing a plurality of tiles (18) each comprising energizable coils (48) for producing an electrical field for effecting the at least one magnet (50) in the mover (14), wherein the plurality of print stations (26) are proximal to at least some of the tiles (18) in the plurality of tiles (18);
magnetically levitating the mover (14) away from the plurality of tiles (18);
controllably moving the levitating mover (14) about the plurality of tiles (18);
positioning the mover (14) with controlled movement until a portion of the surface of the three dimensional article (28) is proximally normal to the print head (30); and
printing ink from the print head (30) to the portion of the surface of the three dimensional article (28); wherein the controlled movement of the mover (14) comprises six degrees of motion relative to the plurality of tiles (28).

10. The method of claim 9, further comprising: arranging the plurality of tiles (18) into an array of tiles (18); or arranging the plurality of tiles (18) into a closed loop arrangement of tiles (18); or arranging the plurality of tiles (18) into a line of tiles (18).

11. The method of any previous claims 9-10, further comprising:
providing a plurality of curing stations (32) and curing the ink printed on the portion of the surface of the three dimensional article (28); and/or
providing at least one vision station (34) and inspecting the article (28); and/or
providing at least one treatment station (36) and pretreating the article (28) prior to printing.

12. The method of any previous claims 9-11, wherein the six degrees of motion include front-to-back linear movement of the mover (14) relative to a surface (20) of the plurality of tiles (18), side-to-side linear movement of the mover (14) relative to said surface (20) of the plurality of tiles (18), vertical movement of the mover (14) relative to said surface (20) of the plurality of tiles (18), rotation around a front-to-back axis of the mover (14) relative to said surface (20) of the plurality of tiles (18), rotation around a side-to-side axis of the mover (14) relative to said surface (20) of the plurality of tiles (18), and rotation around the vertical axis of the mover (14) relative to said surface (20) of the plurality of tiles (18).

13. The method of any previous claims 9-12, further comprising: controlling a velocity and/or an acceleration of the mover (14) relative to the plurality of tiles (18).

14. The method of any previous claims 9-13, further comprising: horizontally disposing the plurality of tiles (18) within the system.

15. The method of any previous claims 9-13, further comprising: vertically disposing the plurality of tiles (18) are within the system.
